# EUROPEAN PATENT SPECIFICATION

(11) **EP 3 302 126 B1**
(45) Date of publication and mention of the grant of the patent: **04.11.2026**
(21) Application number: 16800829.0
(22) Date of filing: 27.05.2016
(51) Int. Cl.: A43B 3/00, A43B 13/12, A43B 13/24, A43B 13/20, G01S 19/01, A43B 21/26, A43B 21/28, A43B 7/14, A43B 13/02, A43B 13/04, A43B 13/18

(54) **FOOTWEAR CUSHION WITH INTERNAL CONFORMAL ELECTRONICS**
KISSEN FÜR SCHUHWERK MIT INTERNER FLEXIBLER ELEKTRONIK
COUSSIN D'ARTICLE CHAUSSANT POURVU D'UNE ÉLECTRONIQUE CONFORME INTERNE

(30) Priority: 28.05.2015 US 201562167720 P
(43) Date of publication of application: 11.04.2018
(73) Proprietor: NIKE Innovate C.V., Beaverton, OR 97005-6453 (US)
(72) Inventor: JACOBSEN, Nathan Andrew, Beaverton, Oregon 97005-6453 (US); PHEIL, Holli, Beaverton, Oregon 97005-6453 (US); SKEELS, Drew McLain, Beaverton, Oregon 97005-6453 (US)
(74) Representative: Haseltine Lake Kempner LLP
(86) International application number: PCT/US2016/034785
(87) International publication number: WO 2016/191730

(56) References cited:
- WO-A1-2014/053588
- JP-A- 2002 272 505
- US-A1- 2006 225 304
- US-A1- 2007 129 907
- US-A1- 2011 260 857
- US-A1- 2012 234 111
- US-A1- 2012 234 921
- US-A1- 2012 291 564
- US-A1- 2014 165 427

## Description

### PRIORITY CLAIM

### TECHNICAL FIELD

The subject matter disclosed herein generally relates to articles of footwear and to methods of manufacturing an article of footwear. More specifically, the subject matter relates to footwear incorporating electronic communication devices.

### BACKGROUND

Apparel, clothing items, footwear and other articles are susceptible to counterfeiting, particularly those of famous and highly desirable brands. Some counterfeit articles can be difficult to distinguish from authentic articles to the untrained eye or the undiscerning individual. Better counterfeit articles can be almost indistinguishable from authentic articles even by experts and professional testing equipment.

Many systems and devices have been developed to identify authentic items with an absolute degree of certainty. U.S. Pat. No. 6,891,474 to Fletcher describes many such systems in the Background section and is itself directed to the use of Radio Frequency Identification (RFID) tags to verify the authenticity of articles. However, incorporation of RFID tags into apparel can be difficult in a manner that prevents detection, tampering and removal of the tag. For example, U.S. Pat. No. 8,308,073 to Lai et al. describes an RFID tag incorporated into the laces of a shoe. WO 2014/053588 A1 relates to an appliance for people with reduced senses of touch or disabled people. According to the abstract of WO 2014/053588 A1: "It is the object of the present invention to provide a device for daily personal use which protects via pressure-relief and immediately alerts the user (e.g. private persons or hospital staff) as to undesirable effects of one or more body parts. The invention is a personal assistive device, which enables patients to be subjected to complicated hospital-monitoring in their homes with no external assistance at any time. This is achieved according to the present invention with an appliance for measuring pressure changes wherein the appliance comprises: one or more pressure-relieving and shock-absorbing regions which comprise(s) liquid and/or air tight pads, the pads containing liquid, gel, gas or a solid, and where the regions are in communication with each other; one or more RFID tags positioned in direct connection with the pressure-relieving and shock-absorbing regions for measuring both static and dynamic pressure changes in the pressure-relieving and shock-absorbing regions. The invention further relates to a system comprising the appliance and a user-feedback device."

### SUMMARY

The invention is set out in the appended set of claims.

### BRIEF DESCRIPTION OF THE DRAWINGS

Some embodiments are illustrated by way of example and not limitation in the figures of the accompanying drawings.
FIG. 1 is an exploded perspective view of a shoe incorporating a sole assembly having a cushion with an embedded near field communication (NFC) antenna.
FIG. 2 is a schematic diagram of an NFC circuit having a shoe sole including an NFC antenna configured to exchange data with an interrogation device.
FIG. 3 is a cross sectional view of another embodiment of a cushion having vertically extending tensile members connecting plies of an air bladder with an NFC antenna interwoven with the tensile members.
FIGS. 4A - 4C show perspective, plan and cross-section views of a cushion having a four-ply air bladder configured as a heel cushion into which an NFC antenna can be incorporated.

### DETAILED DESCRIPTION

The present inventors have recognized, among other things, that problems to be solved with conventional RFID authentication tags can include protecting the tag from environmental damage, among other things. According to the invention there is provided an article of footwear according to claim 1 and a method according to claim 7.

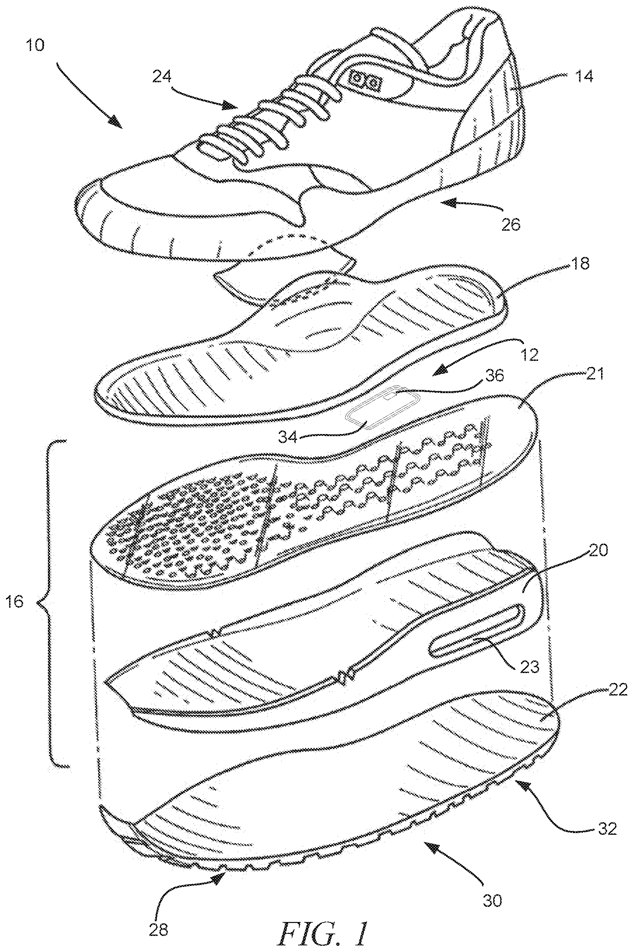

FIG. 1 is an exploded perspective view of shoe 10 incorporating near field communication (NFC) device 12. Shoe 10 can comprise upper 14 and sole assembly 16. A foot of a wearer of shoe 10 can rest on sole assembly 16, while upper 14 surrounds the foot to maintain the foot inserted into shoe 10. Sole assembly 16 can comprise insole 18, midsole 20, cushion 21 and outsole 22. Insole 18 can be inserted into upper 14. Midsole 20 can be attached to the bottom of upper 14. Outsole 22 can be attached to the bottom of midsole 20. Cushion 21 can preferably be incorporated into sole assembly 16 so as to be viewable in window 23 of midsole 20. Cushion 21 can be incorporated into midsole 20 by any conventional technique such as foam encapsulation or placement in a cut-out portion of a foam midsole. Cushion 21 can be configured to include embedded therein device 12 for receiving and transmitting signals with an interrogation device. Cushion 21 can provide a clean, low wear, safe and hidden location for device 12.

Shoe 10 has medial, or inner, side 24 and lateral, or outer, side 26. For purposes of general reference, shoe 10 may be divided into three general portions: forefoot portion 28, mid-foot portion 30, and heel portion 32. Portions 28, 30 and 32 are not intended to demarcate precise areas of shoe 10, rather, they are intended to represent general areas of shoe 10 that provide a frame of reference during the following discussion, as is discussed below in the Additional Notes section. Furthermore, although the present description is written with reference to an athletic shoe, the disclosure of the present application can be applied equally to other types of footwear, such as, but not limited to, dress shoes, running shoes, golf shoes, tennis shoes, sandals, boots, slippers and the like.

Sole assembly 16, which is generally disposed between the foot of the wearer and the ground, provides attenuation of ground reaction forces (i.e., imparting cushioning), traction, and may control foot motions, such as pronation. Insole 18 can typically comprises a removable insert disposed atop cushion 21 or midsole 20, and can provide additional cushioning or ventilation (e.g. by including perforations). Midsole 20 can be attached to upper 14 and function as the primary shock-attenuating and energy-absorbing component of shoe 10. Midsole 20 can be secured to upper 14 by adhesive or other suitable means. Suitable materials for midsole 20 include polymer foam materials such as ethylvinylacetate or polyurethane, or any other material that compresses resiliently. Outsole 22 can be attached to the lower surface of midsole 20 by adhesive or other suitable means. Suitable materials for outsole 22 include polymers, e.g., polyether-block co-polyamide polymers (sold as Pebax^{®} by ATOFINA Chemicals of Philadelphia, Pa.), and nylon resins such as Zytel^{®}, sold by Dupont. Other suitable materials for outsole 22 will become readily apparent to those skilled in the art, given the benefit of this disclosure. In certain embodiments, sole assembly 16 may not include an outsole layer separate from midsole 20 but, rather, the outsole may comprise a bottom surface of midsole 20 that provides the external traction surface of sole assembly 16.

Various embodiments of device 12 of the present disclosure can be incorporated into various designs of cushion 21. For example, cushion 21 comprises an air bladder comprising two plies of polymeric membrane, as is described in U.S. Pat. No. 5,802,739 to Potter et al. In another embodiment, a four-ply air bladder may be used, as is described in U.S. Pat. No. 6,402,879 to Tawney et al. In yet another embodiment, a fabric cushioning element may be used, as is described in U.S. Pat. No. 8,764,931 to Turner. In yet other embodiments, a bladder may be filled with other gases, such as nitrogen, helium or so-called dense gases such as sulfur hexafluoride, a liquid, or gel.

Device 12 can include coil 34 and microchip 36. Device 12 can be configured as a near field communication (NFC) antenna. For example, device 12 can comprise a thin wire of copper that is wound in a flat spiral, with ends of the wire connected to microchip 36. In another example, device 12 can be configured as a radio frequency identification (RFID) tag. Near field communication devices can typically operate at the same frequency (13.56 MHz) as High Frequency RFID readers and tags. The standards and protocols of the NFC format are based on RFID standards outlined in the following standards, which are directed to RFID proximity cards:
ISO/IEC 14443-1:2008 Identification cards -- Contactless integrated circuit cards -- Proximity cards -- Part 1: Physical characteristics;
ISO/IEC 14443-2:2010 Identification cards -- Contactless integrated circuit cards -- Proximity cards -- Part 2: Radio frequency power and signal interface;
ISO/IEC 14443-3:2011 Identification cards -- Contactless integrated circuit cards -- Proximity cards -- Part 3: Initialization and anticollision; and
ISO/IEC 14443-4:2008 Identification cards -- Contactless integrated circuit cards -- Proximity cards -- Part 4: Transmission protocol.

Device 12 is described in the disclosure as being an NFC device by way of example only. In other examples, other wireless modalities may be implemented according to the same principles described with respect to an NFC device. For example, ultra high frequency (UHF) devices may be used. UHF wireless communication may vary in operation frequency between and among certain countries, but in general may be understood to occur over the range of approximately 300 megahertz (MHz) to approximately three (3) gigahertz (GHz). Certain regions throughout the world utilize a variety different of industrial, scientific, and medical (ISM) bands for UHF communications. Certain ISM bands are centered around approximately 900 MHz, with the center frequencies of those bands falling generally within the range of approximately 869 MHz to approximately 915 MHz.

In an example, an antenna is configured to communicate according to a UHF standard, including any one or more of Gen2 or ISO18000-6C (again including versions of those standards that are past, current, or that may be developed). In an example, an antenna is configured to communicate according to any one or more standards including ISO14443B, ISO1443A NFC Type 4, and ISO 15693 (including contemporary and previous versions of those standards ).

In other embodiments, device 12 can be configured to enhance signal transmission in order to facilitate transmission through the wearer and material of shoe 10 (FIG. 1). For example, device 12 can include two antennas that are tuned differently; one being conventionally tuned, and the other being tuned so as to accommodate transmission through a human body or configured to communicate at a different frequency. Such devices are described in U.S. Provisional Patent Application No. 62/144,773, entitled "Multi-Antenna Tuned UHF Footwear" and filed April 8, 2015.

In yet other examples, device 12 may comprise a Bluetooth communication device, or another active or passive device.

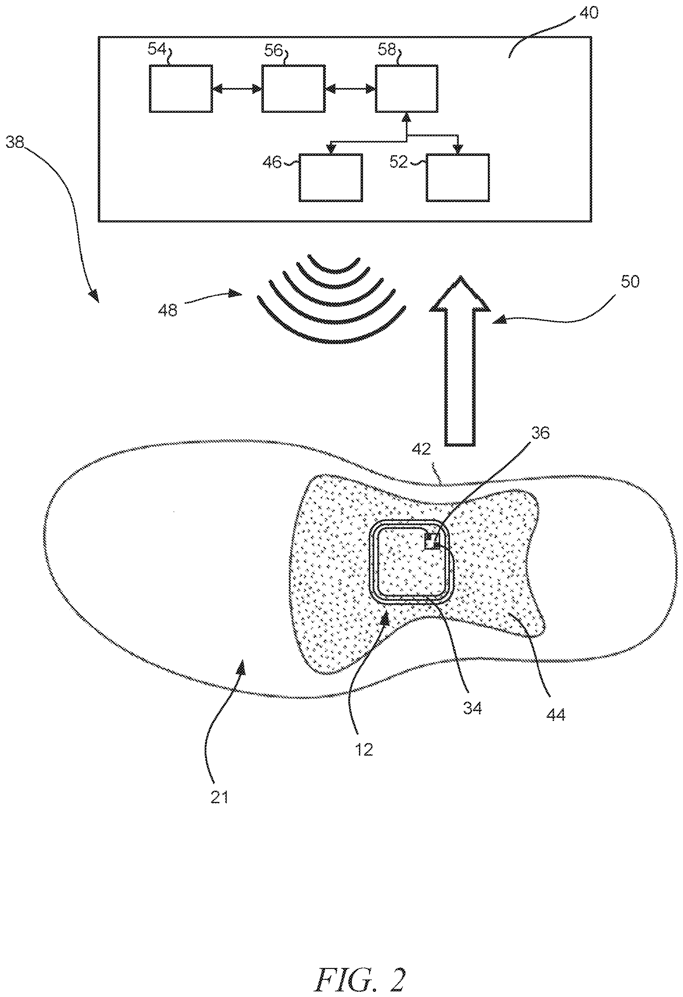

NFC devices suitable for use with the cushions of the present disclosure are positioned within cushion 21 so as to facilitate transition of communication signals through the various layers of upper 14 and sole assembly 16. As such, device 12 can be positioned as close as possible to an outer surface of shoe 10. As discussed with reference to FIG. 2, device 12 can communicate with an electronic interrogation device to receive information relating to shoe 10.

FIG. 2 is a block diagram of NFC communication system 38 in which shoe cushion 21 includes NFC device 12 configured to exchange data with interrogation device 40. Shoe cushion 21 can include air bladder 42 that surrounds weld area 44. Device 12 can include coil 34 and microchip 36. Interrogation device 40 can be an active device that includes generator 46 for generating signal 48 that can power and activate device 12. Specifically, signal 48 can comprise a high frequency radio wave that causes current to be generated in coil 34, thereby providing power to microchip 36. Signal 48 can simultaneously carry data to microchip 36 that can be read and stored when powered. In reply, device 12 can generate signal 50 that can be read by reader 52 of interrogation device 40. Signal 50 can also comprise a radio wave that carries data stored in microchip 36.

Interrogation device 40 can also include other components, such as input/output device 54, memory 56 and circuitry 58, that allow an operator of system 38 to write data to and receive data from microchip 36. Circuitry 58 can include a transceiver, a voltage rectifier and a modulator, as appropriate for device 12. Memory 56 can comprise any suitable electronic data storage medium, such as an electrically erasable programmable read-only memory ("EEPROM") circuit. Further description of antennas and interrogation devices that can be used in accordance with the present disclosure is found in U.S. Pat. No. 8,461,979 to Case, Jr..

Authentication information from the manufacturer of shoe 10 (FIG. 1) can be stored in microchip 36 to verify the origin of shoe 10, which can aid in preventing trafficking of counterfeit articles. Also, microchip 36 can include information concerning the owner of shoe 10, which can be updated by interrogation device 40, in order to identify stolen goods. Device 12 can be located sufficiently close to the outside of cushion 21 such that signals 48 and 50 can readily communicate with each other. However, device 12 can be located further within the interior of cushion 21 so as to be discreet and protected from tampering and wear.

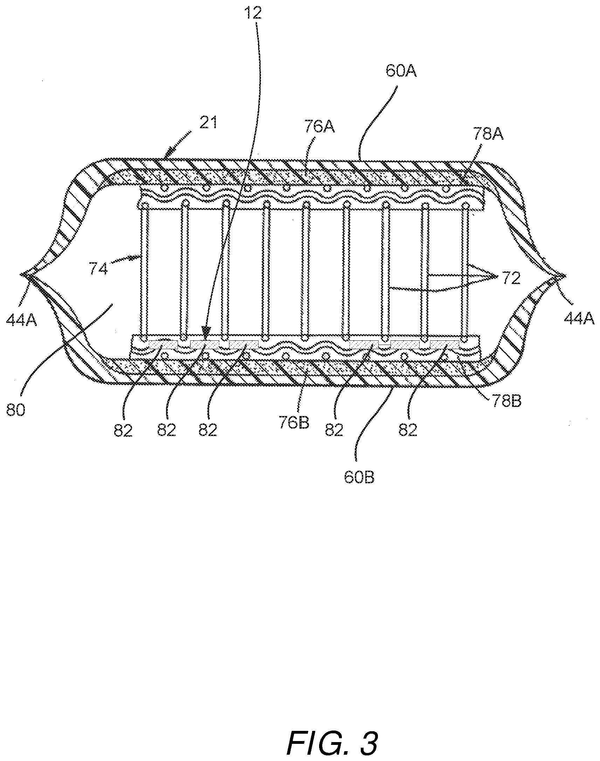

A type of air bladder which can be used in conjunction with device 12 employs three dimensional fabric as tensile members, such as those disclosed in U.S. Pat. Nos. 4,906,502 and 5,083,361 to Rudy. The air bladders described in the Rudy patents have enjoyed considerable commercial success in NIKE, Inc. brand footwear under the name Tensile-Air^{®} and Zoom^{™}, and are thus susceptible to counterfeiting. Air bladders using fabric tensile members can virtually eliminate deep peaks and valleys, and the methods described in the Rudy patents have proven to provide an excellent bond between the tensile fibers and membrane layers. In addition, the individual tensile fibers are small and deflect easily under load so that the fabric does not interfere with the cushioning properties of air. The fibers additionally provide a space where device 12 of the present disclosure can be incorporated during manufacture, as discussed with reference to FIG. 3.

FIG. 3 is a cross sectional view of another embodiment of air cushion 21 having vertically extending tensile members 72 of tensile fiber assembly 74 connecting membranes 60A and 60B, with NFC device 12 interwoven with tensile members 72. Tensile fiber assembly 74 can connect to membranes 60A and 60B using bonding agent layers 76A and 76B. Tensile members 72 can be assembled into tensile fiber assembly 74 using fabric layers 78A and 78B deposited within chamber 80. Windings 82 of NFC device 12 can be incorporated into one or both of fabric layers 78A and 78B.

Cushion 21 can be a composite structure in which an outer semi-permeable membrane 60A and an inner semi-permeable membrane 60B define pressure tight sealed chamber 80 in which a tensile load-bearing structure, e.g. tensile fiber assembly 74, can be disposed. Tensile fiber assembly 74 can comprise tensile members 72 extending between fabric layers 78A and 78B. Fabric layers 78A and 78B provide support to tensile members 72. For example, tensile members 72 can comprise one or more long strands threaded between fabric layers 78A and 78B, or multiple strands each individually connected to fabric layers 78A and 78B. Individual windings 82 of device 12 can be interspersed between tensile members 72. In one example, windings 82 can be located within fabric layer 78B, as shown, or fabric layer 78A. However, in other embodiments, windings 82 can be located on an exterior surface of fabric layer 78A or 78B and held in place with an adhesive, stitching or the like. For example, windings 82 can be printed onto fabric layer 78A and/or fabric layer 78B using a conductive ink and digital or screen printing techniques.

In the completed structure indicated for example in FIG. 3, portions of membranes 60A and 60B can be rendered molten for purposes of bonding with bonding agent layers 76A and 76B. The application of heat to membranes 60A and 60B during manufacturing is preferably controlled so that bonding agent layers 76A and 76B are the only parts of the structure which become molten. Periphery weld 44A can hermetically seal chamber 80 and can extend entirely around the periphery of cushion 21 to achieve a pressure tight enclosure. Weld 44A can be made as close as possible to the edge of membranes 60A and 60B without trapping any of fabric layers 78A and 78B in the weld itself. If desired, the sides of fabric layers 78A and 78B may be treated with chemical coupling agents such as silanes (DOW X16106) to improve adhesion.

Windings 82 can wind between tensile members 72 in a spiral fashion and can connect to microchip 36 (FIG. 2). Fabric layers 78A and 78B can provide a platform upon which device 12 can be built to support windings 82 and to contain device 12 within the sealed environment of air cushion 21. Windings 82 can be incorporated into fabric layers 78A and 78B during manufacture of tensile fiber assembly 74. Alternatively, windings 82 can be threaded into fabric layers 78A and 78B after tensile fiber assembly 74 is manufactured. Fabric layers 78A and 78B can stabilize winding 82 during impacting of cushion 21, while the pressurization of chamber 80 can provide protection to device 12 from impact and the environment.

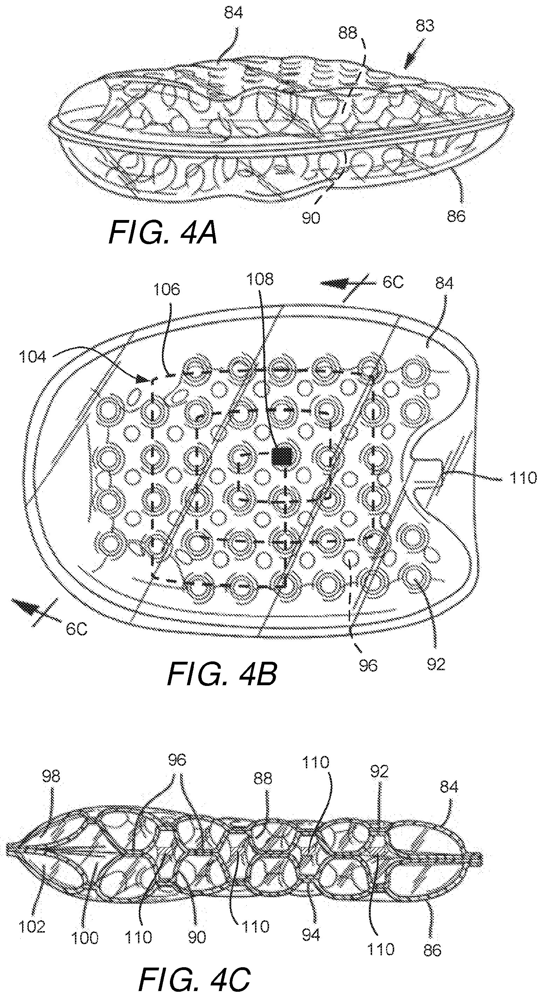

FIGS. 4A - 4C show a relatively simple four film layer bladder 83 that can have film layers 84, 86, 88 and 90 generally arranged in an orthogonal array. Bladder 82 can comprise outer film layers 84 and 86 which can be attached to inner film layers 88 and 90 at upper connection sites 92 and lower connection sites 94, respectively. Inner film layers 88 and 90 can be attached to one another at connection sites 96 which are incoincident, that is, not in alignment, with their respective connection sites 92, 94 to the outer film layers. As illustrated in the sectional view of FIG. 4C, this can result in inner layers 88 and 90 extending between outer layers 84 and 86, and acting as a tensile member for bladder 83. Four film layers can result in bladder 83 having three vertically stacked fluid layers through any cushioning profile: first outer fluid layer 98; middle fluid layer 100 and second outer fluid layer 102.

Communication device 104 can be disposed within film layers 84 - 90 and can include antenna 106 and microchip 108. Windings 110 of antenna 106 can be disposed within middle fluid layer 100, first outer fluid layer 98 or second outer fluid layer 102. In the illustrated embodiment, windings 110 can be spirally wound through middle fluid layer 100. As such, windings 110 can be located within tensile members connecting outer film layers 84 and 86. In one example, windings 110 can be free-standing within bladder 83. In another example, windings 110 can be printed onto one of film layers 84 - 90 using a conductive ink and digital or screen printing techniques.

In the embodiment of FIGS. 4A - 4C, middle fluid layer 100 can comprise a series of tubular spaces filled with fluid. In a simple form, these three fluid layers can be pressurized to different pressures to obtain a desired cushioning profile. For instance, if a soft-firm-soft profile were desired as one giving the best cushioning feel to a wearer while providing high pressure fluid in the middle fluid layer for responding to high impact loads, the outer fluid layers could be pressurized to P1 with the inner fluid layer being pressurized to P2, where P1 < P2. Alternatively, all three fluid layers could be pressurized to different pressures to further customize the cushioning profile.

In one particular example, bladder 83 can be well suited for use in heel portion 32 of shoe 10 (FIG. 1) with the curved semicircular end being aligned with the rear portion of a wearer's heel. In this manner, stem 110 would be located near the arch area of a wearer's foot. Stem 110 could be located at any convenient peripheral location, and would likely be removed altogether once bladder 82 is filled with fluid and the stem area sealed. In other examples, bladder 83 can be used in mid-foot portion 30 or forefoot portion 28 of shoe 10 (FIG. 1). In one particular example, bladder 83 is positioned so that communication device 104 is located in an arch location to avoid direct impact between from a heel or ball of a foot.

The embodiments described heretofore are partial foot bladders of relatively simple construction using circular dot welds as connection sites 92, 94 and 96. The principles of the multiple film layer and multiple fluid layer bladder can be applied to any suitable bladder shape and application. The dot welds forming connection sites 92, 94 and 96 can provide spaces within bladder 83 that readily receive and protect device 104. First outer fluid layer 98, middle fluid layer 100 and second outer fluid layer 102 can provide hermetically sealed spaces that protect and cushion antenna 106 and microchip 108.

### ADDITIONAL NOTES

As used herein, the term "memory" refers to a machine-readable medium able to store data temporarily or permanently and may be taken to include, but not be limited to, random-access memory (RAM), read-only memory (ROM), buffer memory, flash memory, ferroelectric RAM (FRAM), and cache memory. The term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions (e.g., software) for execution by a machine, such that the instructions, when executed by one or more processors of the machine, cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

Unless otherwise stated, or otherwise clear from the context below, directional terms used herein, such as rearwardly, forwardly, top, bottom, inwardly, downwardly, upwardly, etc., refer to directions relative to footwear 10 itself. Shoe 10 is shown in FIG. 1 to be disposed substantially horizontally, as it would be positioned on a horizontal surface when worn by a wearer. However, it is to be appreciated that shoe 10 need not be limited to such an orientation. Thus, in the illustrated embodiment of FIG. 1, rearwardly is toward heel portion 32, that is, to the left as seen in FIG. 1. Naturally, forwardly is toward forefoot portion 28, that is, to the right as seen in FIG. 1, and downwardly is toward the bottom of the page as seen in FIG. 1. Top refers to elements toward the top of the page as seen in FIG. 1, while bottom refers to elements toward the bottom of the page as seen in FIG. 1. Inwardly is toward the center of shoe 10, and outwardly is toward the outer peripheral edge of shoe 10.

## Claims

1. An article of footwear (10), comprising:
an upper (14); and
a sole assembly (16) connected to the upper to form a receptacle for a human foot, the sole assembly comprising:
a cushion (21) comprising an exterior wall that forms an enclosure, an inflatable bladder (42) filled with a gas, and two plies of laminate (60A, 60B) joined at a weld area (44), the two plies of laminate (60A, 60B) being joined to form the inflatable bladder (42);
an antenna (106) disposed within the enclosure and disposed in the inflatable bladder;
wherein the inflatable bladder includes a plurality of tensile fibers connecting the two plies, and the antenna is interwoven with the tensile fibers or disposed within a fabric layer connecting the plurality of tensile fibers (74); and
a microchip (108) connected to the antenna.

2. The article of footwear (10) of claim 1, wherein the antenna (106) and microchip (108) comprise a near field communication device.

3. The article of footwear (10) of claim 1, wherein the cushion (21) comprises four plies of laminate joined at weld locations and the antenna (106) is disposed between adjacent plies of the bladder (42).

4. The article of footwear (10) of claim 1, wherein the cushion (21) includes a forefoot portion, a mid-foot portion and a heel portion.

5. A system comprising the article of footwear of any one or more of claims 1 - 4 and an external interrogation device configured to communicate wirelessly with the antenna.

6. A method of manufacturing an article of footwear (10), the method comprising:
positioning an electronic communication device comprising an antenna (106) between two plies of polymer laminate (60A, 60B),
heating the two plies of polymer laminate to form a weld area (44) and a cushion area (42), wherein the electronic communication device becomes encapsulated between the two plies of polymer laminate;
disposing a tensile fiber assembly between the two plies of polymer laminate;
interweaving the antenna of the electronic communication device within fibers of the tensile fiber assembly or interweaving the antenna of the electronic communication device within fabric layers joining the fibers (74);
connecting a microchip to the antenna;
inflating the cushion area with a gas; and
sealing the cushion area.

7. The method of manufacturing an article of footwear of claim 6, wherein the cushion area includes the electronic communication device.

## Patentansprüche

1. Fußbekleidungsartikel (10), umfassend:
ein Obermaterial (14) und
eine Sohlenanordnung (16), die mit dem Obermaterial verbunden ist, um eine Aufnahme für einen menschlichen Fuß zu bilden, wobei die Sohlenanordnung Folgendes umfasst:
ein Polster (21), das eine Außenwand, die ein Gehäuse bildet, eine aufblasbare Blase (42), die mit einem Gas gefüllt ist, und zwei Lagen Laminat (60A, 60B), die an einem Schweißbereich (44) verbunden sind, umfasst, wobei die zwei Lagen Laminat (60A, 60B) verbunden sind, um die aufblasbare Blase (42) zu bilden;
eine Antenne (106), die innerhalb des Gehäuses angeordnet und in der aufblasbaren Blase angeordnet ist;
wobei die aufblasbare Blase mehrere Zugfasern enthält, die die zwei Lagen verbinden, und die Antenne mit den Zugfasern verwebt ist oder innerhalb einer Stoffschicht angeordnet ist, die die mehreren Zugfasern verbindet (74); und
einen Mikrochip (108), der mit der Antenne verbunden ist.

2. Fußbekleidungsartikel (10) nach Anspruch 1, wobei die Antenne (106) und der Mikrochip (108) eine Nahfeldkommunikationsvorrichtung umfassen.

3. Fußbekleidungsartikel (10) nach Anspruch 1, wobei das Polster (21) vier Lagen Laminat umfasst, die an Schweißstellen verbunden sind, und die Antenne (106) zwischen benachbarten Lagen der Blase (42) angeordnet ist.

4. Fußbekleidungsartikel (10) nach Anspruch 1, wobei das Polster (21) einen Vorderfußabschnitt, einen Mittelfußabschnitt und einen Fersenabschnitt enthält.

5. System, umfassend den Fußbekleidungsartikel nach einem oder mehreren der Ansprüche 1-4 und eine externe Abfragevorrichtung, die dazu ausgelegt ist, drahtlos mit der Antenne zu kommunizieren.

6. Verfahren zum Herstellen eines Fußbekleidungsartikels (10), wobei das Verfahren Folgendes umfasst:
Positionieren einer elektronischen Kommunikationsvorrichtung, die eine Antenne (106) umfasst, zwischen zwei Lagen Polymerlaminat (60A, 60B);
Erwärmen der zwei Lagen Polymerlaminat, um einen Schweißbereich (44) und einen Polsterbereich (42) zu bilden, wobei die elektronische Kommunikationsvorrichtung zwischen den zwei Lagen Polymerlaminat eingekapselt wird;
Anordnen einer Zugfaseranordnung zwischen den zwei Lagen Polymerlaminat;
Verweben der Antenne der elektronischen Kommunikationsvorrichtung innerhalb Fasern der Zugfaseranordnung oder Verweben der Antenne der elektronischen Kommunikationsvorrichtung innerhalb Stoffschichten, die die Fasern verbinden (74);
Verbinden eines Mikrochips mit der Antenne;
Aufblasen des Polsterbereichs mit einem Gas und
Abdichten des Polsterbereichs.

7. Verfahren zum Herstellen eines Fußbekleidungsartikels nach Anspruch 6, wobei der Polsterbereich die elektronische Kommunikationsvorrichtung enthält.

## Revendications

1. Article chaussant (10), comprenant :
une tige (14) ; et
un ensemble semelle (16) raccordé à la tige pour former un réceptacle pour un pied humain, l'ensemble semelle comprenant :
un coussin (21) comprenant une paroi extérieure qui forme une enceinte, une vessie gonflable (42) remplie avec un gaz, et deux plis de stratifié (60A, 60B) joints au niveau d'une zone de soudure (44), les deux plis de stratifié (60A, 60B) étant joints pour former la vessie gonflable (42) ;
une antenne (106) disposée à l'intérieur de l'enceinte et disposée dans la vessie gonflable ;
dans lequel la vessie gonflable inclut une pluralité de fibres de traction raccordant les deux plis, et l'antenne est entrelacée avec les fibres de traction ou disposée à l'intérieur d'une couche de tissu raccordant la pluralité de fibres de traction (74) ; et
une micropuce (108) raccordée à l'antenne.

2. Article chaussant (10) de la revendication 1, dans lequel l'antenne (106) et la micropuce (108) comprennent un dispositif de communication en champ proche.

3. Article chaussant (10) de la revendication 1, dans lequel le coussin (21) comprend quatre plis de stratifié joints au niveau d'emplacements de soudure et l'antenne (106) est disposée entre des plis adjacents de la vessie (42).

4. Article chaussant (10) de la revendication 1, dans lequel le coussin (21) inclut une partie d'avant-pied, une partie de mi-pied, et une partie de talon.

5. Système comprenant l'article chaussant d'une ou de plusieurs quelconques des revendications 1 à 4 et un dispositif d'interrogation externe configuré pour communiquer sans fil avec l'antenne.

6. Procédé de fabrication d'un article chaussant (10), le procédé comprenant :
le positionnement d'un dispositif de communication électronique comprenant une antenne (106) entre deux plis de stratifié polymère (60A, 60B) ;
le chauffage des deux plis de stratifié polymère pour former une zone de soudure (44) et une zone de coussin (42), dans lequel le dispositif de communication électronique devient encapsulé entre les deux plis de stratifié polymère ;
la disposition d'un ensemble de fibres de traction entre les deux plis de stratifié polymère ;
l'entrelacement de l'antenne du dispositif de communication électronique à l'intérieur de fibres de l'ensemble de fibres de traction ou l'entrelacement de l'antenne du dispositif de communication électronique à l'intérieur de couches de tissu joignant les fibres (74) ;
le raccordement d'une micropuce à l'antenne ;
le gonflement de la zone de coussin avec un gaz ; et
le scellage de la zone de coussin.

7. Procédé de fabrication d'un article chaussant de la revendication 6, dans lequel la zone de coussin inclut le dispositif de communication électronique.
